Europäisches Patentamt

European Patent Office

Office européen des brevets

(11) Veröffentlichungsnummer: **0 567 910 A1**

## (12) EUROPÄISCHE PATENTANMELDUNG

(21) Anmeldenummer: **93106427.3**

(22) Anmeldetag: **21.04.93**

(51) Int. Cl.5: **B23K 15/00**, C21D 1/09

(30) Priorität: **24.04.92 DE 4213632**

(43) Veröffentlichungstag der Anmeldung:
**03.11.93 Patentblatt 93/44**

(84) Benannte Vertragsstaaten:
**AT BE CH DE ES FR GB IT LI LU NL SE**

(71) Anmelder: **FRAUNHOFER-GESELLSCHAFT ZUR FÖRDERUNG DER ANGEWANDTEN FORSCHUNG E.V.**
**Leonrodstrasse 54**
**D-80636 München 19(DE)**
Anmelder: **SÄCHSISCHE ELEKTRONENSTRAHL GmbH**
**Eulitzstrasse 2**
**O-9005 Chemnitz(DE)**

(72) Erfinder: **Panzer, Siegfried**
**Hellendorfer Strasse 8**
**O-8021 Dresden(DE)**
Erfinder: **Döhler, Heinz**
**H.-Schubert-Strasse 5**
**O-8051 Dresden(DE)**
Erfinder: **Furchheim, Bodo**
**Eulitzstrasse 2**
**O-9005 Chemnitz(DE)**

(54) **Verfahren zur thermischen Oberflächenmodifikation metallischer Bauteile mit Elektronenstrahlen.**

(57) Das Verfahren soll es ermöglichen, in der Prozeßebene beliebig begrenzte und in ihrem Leistungsdichteprofil zweidimensional beliebig wählbare Energieübertragungsfelder zu erzeugen.

Erfindungsgemäß wird durch schnelle periodische Ablenkung der Elektronenstrahl innerhalb eines Ablenkzyklus entlang eines sich über das Energieübertragungsfeld erstreckenden Zeilenrasters, dessen Zeilenlänge, Zeilenlage und Zeilendichte nach Maßgabe des zu erzeugenden Leistungsdichteprofils gewählt ist, mit konstanter Ablenkgeschwindigkeit geführt.

Durch die Erfindung sind Prozesse zur thermischen Oberflächenmodifikation mit einem der Bauteilgeometrie und der gewünschten Temperaturführung anpaßbaren Leistungsdichteprofil möglich.

EP 0 567 910 A1

Die Erfindung betrifft ein Verfahren zur thermischen Oberflächenmodifikation metallischer Bauteile durch Energieübertragung mittels Elektronenstrahl. Das Verfahren dient dazu, um in einem geeigneten Kurzzeit-Temperaturorozeß die Werkstoffeigenschaften in einem oberflächennahen Bauteilbereich im Sinne der jeweiligen Oberflachenbeanspruchung zu verbessern. Solche Eigenschaftsverbesserungen können z. B. die Erhöhung der Oberflächenhärte und die Verbesserung der Verschleiß- oder Korrosionsbeständigkeit sein.

Es ist bekannt, je nach Prozeßführung zwischen Fest- und Flüssigphasenprozessen zu unterscheiden. Wichtigster Festphasenprozeß ist das Härten von Oberflächenschichten auf Bauteilen aus umwandlungshartbaren Eisenwerkstoffen. Bei Flussigphasenprozessen wird die Schmelztemperatur des Werkstoffs überschritten. Die mit dem Prozeß verbundene wärmeleitungsbedingte schnelle Erstarrung der Schmelze kann für vielfältige Verbesserungen der Werkstoffeigenschaften genutzt werden. Durch Zulegieren geeigneter Werkstoffe in die Schmelze werden mit der Veränderung der chemischen Werkstoffzusammensetzung weitere gezielte Eigenschaftsverbesserungen möglich.

Die Verfahren der thermischen Oberflächenveredelung und dabei erzielbaren Werkstoffeffekte sind grundsätzlich bekannt. Die auf oberflächennahe Bauteilbereiche begrenzte Temperaturerhöhung erfordert Energiequellen hinreichend hoher Leistungsdichte, wie sie z. B. mit Elektronenstrahlen zur Verfügung stehen.

Die erzielbaren Effekte, die Anwendbarkeit der Verfahren für eine unterschiedliche Geometrie der zu behandelnden Bauteiloberfläche und vor allem die Wirtschaftlichkeit der Verfahren sind eng an die örtlich-zeitliche Führung des Elektronenstrahles auf dem Bauteil gebunden. Es wurden bereits eine Reihe von Verfahren mit punkt-, linien- und flächenförmig ausgedehnten Energieübertragungsfeldern vorgeschlagen. In dieser Reihenfolge gelang es auch, zunehmend höhere Strahlleistungen als Voraussetzung für hinreichende Wirtschaftlichkeit des Verfahrens zum Einsatz zu bringen.

Der gegenwärtig erreichte Leistungsstand bezüglich der eingesetzten Strahlführungstechnik zur thermischen Oberflächenmodifikation mit Elektronenstrahlen wird durch die sogenannte High Speed Scan Technik bestimmt. In dieser Strahlführungstechnik wird der Elektronenstrahl hochfrequent periodisch nach einer zeitlinearen Ablenkfunktion innerhalb eines rechteckigen Energieübertragungsfeldes in einem Zeilenraster gescant. Die Zeilenabstände innerhalb des Rasters können dabei von Zeile zu Zeile beliebig programmiert werden. Auf diese Weise ist es möglich, rechteckförmige Energieübertragungsfelder mit eindimensional veränderlicher Leistungsdichteverteilung bzw. Leistungsdichteprofil zu erzeugen.

Unter Nutzung dieser Strahlablenktechnik konnten Verfahren der thermischen Oberflächenmodifikation mit Elektronenstrahlen insbesondere für bahnförmige Oberflächenbereiche auf zumindest stückweise ebenen oder zylindrischen Bauteilen zum industriellen Einsatz gebracht werden [DD-PS 259 210 B 1; DD-PS 270 087 A 1; DD-PS 270 088 B 1; DD-PS 270 090 A 1; HTM 42(1987)5, S. 293-300].

Die bei den bekannten Verfahren bedingte Begrenzung des Energieübertragungsfeldes auf ein Rechteck und die fehlende Möglichkeit zur Erzeugung eines zweidimensionalen Leistungsdichteprofils engen jedoch die weitere Ausdehnung des Verfahrens erheblich ein.

Der Erfindung liegt die Aufgabe zugrunde, ein Verfahren zur thermischen Oberflächenmodifikation mit Elektronenstrahlen zu schaffen, mit welchem in der Prozeßebene beliebig begrenzte und in ihrem Leistungsdichteprofil zweidimensional beliebig wählbare Energieübertragungsfelder erzeugt werden können und auch unebene Oberflächen in einem definierten Profil thermisch modifizierbar sind.

Erfindungsgemäß wird die Aufgabe durch Einwirkung eines Elektronenstrahls auf den thermisch zu modifizierenden Oberflächenbereich des Bauteils nach den Merkmalen des Patentanspruches 1 gelöst. In den Unteransprüchen sind weitere Ausgestaltungen des Verfahrens beschrieben.

Zweckmäßigerweise sollten die Abstände der innerhalb eines Strahlablenkzyklus durchlaufenen Zeilen an keinem Ort des Energieübertragungsfeldes nennenswert größer sein, als der Strahldurchmesser am betreffenden Einwirkort auf dem Bauteil gewählt wird. Die den Teilleistungsdichteflächen zugeordneten Zeilenraster werden derart versetzt, daß sie zumindest im Bereich der höchsten Gesamtleistungsdichte ein Zeilenraster äquidistanter Zeilen, d. h. Ablenkspuren ergeben.

Ebenso ist es von Vorteil, die innerhalb eines Strahlablenkzyklus zeitlich nacheinander durchlaufenen, den Teilleistungsdichten zugeordneten Zeilenraster orthogonal zur Zeilenrichtung an jedem Ort auf dem Bauteil um mindestens einen Strahldurchmesser gegeneinander zu versetzen.

Das erfindungsgemäße Verfahren gestattet die Durchführung von Prozessen zur thermischen Oberflächenmodifikation mit Elektronenstrahlen mit einem der Bauteilgeometrie und der gewünschten Temperaturführung anpaßbaren Leistungsdichteprofil im Energieübertragungsfeld. Ein weiterer Vorteil besteht in der Nutzbarkeit hoher Strahlleistungen als entscheidenden Faktor für hohe Verfahrensproduktivität und damit gute Wirtschaftlichkeit. Für die Durchführung von Prozessen in der schmelzflüssigen Phase bietet die Erfindung infolge der Realisierbarkeit praktisch beliebiger Leistungsdichteprofile günstige Voraussetzungen zur Beeinflussung des lateralen Temperaturgradienten und damit der Oberflächengeometrie der erstarrten Schmelze.

An zwei Beispielen wird die Erfindung näher erläutert.

Die zugehörigen Zeichnungen zeigen in:

Fig. 1: ein halbkugelförmiges Leistungsdichteprofil p(r),

Fig. 2: ein approximiertes Leistungsdichteprofil p'(r),

Fig. 3: den Verlauf der Ablenkspuren des Elektronenstrahles zur Erzeugung des Leistungsdichteprofils nach Fig. 4,

Fig. 4: einen Ablenkzyklus des Elektronenstrahls in der Gesamtheit der vom Elektronenstrahl durchlaufenen Zeilen,

Fig. 5: ein Leistungsdichteprofil p (r, $\phi$) in perspektivischer Darstellung zur Härtung einer Kreisringfläche,

Fig. 6: den Verlauf der Ablenkspuren des Elektronenstrahles zur Erzeugung des Leistungsdichteprofils nach Fig. 5.

An einem ersten Beispiel wird das Verfahren bei der Durchführung einer Aufgabe der thermischen Oberflächenmodifikation beschrieben, wobei willkürlich ein halbkugelförmiges Leistungsdichteprofil gewählt wurde.

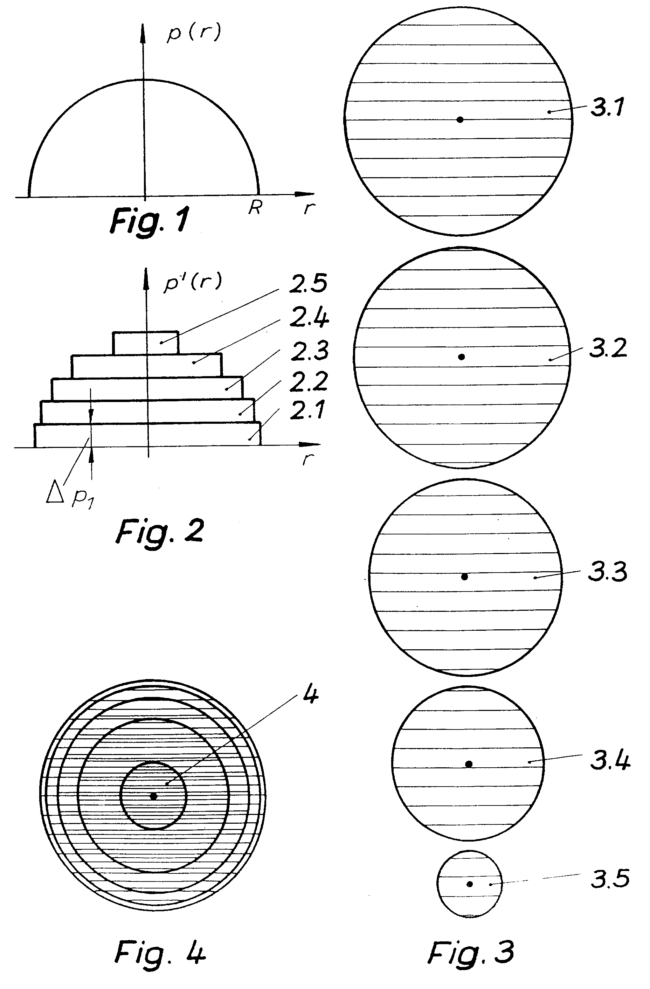

Aus den Fig. 1 und 2 ist zu erkennen, wie ein vorgegebenes rotationssymmtrisches Leistungsdichteprofil 1 approximiert wird, indem dieses Profil in mehrere Scheiben bzw. Flächen 2.1 bis 2.5 gleicher Teilleistungsdichte aufgeteilt wird. (Der Begriff "Scheiben" wurde hier in Anbetracht der zeichnerischen Darstellung gewählt.) Diese Flächen 2.1 bis 2.5 sind in ihrem Durchmesser und Abstand zueinander in Anpassung an das Leistungsdichteprofil 1 entsprechend abgestuft, so daß sich damit auch die vom Elektronenstrahl zu beaufschlagende Fläche stufenweise ändert. Die Leistungsdichte jeder Fläche 2.1 bis 2.5 ist in diesem Beispiel gleich, d. h. $\Delta p_1 = \Delta p_i = \Delta p_n$.

Auf jeder dieser Flächen 2.1 bis 2.5 werden, wie in Fig. 3 dargestellt, Ablenkspuren in Form eines Zeilenrasters 3.1 bis 3.5 erzeugt. Sämtliche dieser Zeilen haben zueinander gleichen Abstand. Ihre Lage und Länge werden durch die Begrenzung, d. h. die Geometrie der jeweiligen Fläche 2.1 bis 2.5 bestimmt.

Jedes der Zeilenraster 3.1 bis 3.5 ist gegeneinander derart versetzt, daß bei ihrer Überlagerung zumindest im Bereich der maximalen Gesamtleitungsdichte, das ist der innere Bereich 4, der durch die Fläche 2.5 bestimmt ist, ein Raster äquidistanter Ablenkspuren (Zeilen) entsteht. Analog gilt das dann auch für die anderen Bereiche, in denen mindestens zwei Zeilenraster überlagert sind. Die Gesamtheit der in einem Ablenkzyklus erzeugten Ablenkspuren zeigt Fig. 4.

Zur Durchführung des Elektronenstrahlprozesses wird der Elektronenstrahl im Energieübertragungsfeld, das durch den Radius R des Leistungsdichteprofils bestimmt ist, derart zur Einwirkung gebracht, daß nacheinander die Ablenkspuren ein Zeilenraster 3.1 bis 3.5 mit konstanter Ablenkgeschwindigkeit erzeugen. Die Art und Weise des Verlaufs der Ablenkspuren auf den Flächen 2.1 bis 2.5 ist so gewählt, daß die in einem Strahlablenkzyklus durchlaufenen fünf benachbarten Ablenkspuren im Bereich 4 in der zeitlichen Reihenfolge 1, 3, 5, 2 und 4 vom Elektronenstrahl durchlaufen werden. Die außerhalb des inneren Bereiches 4 des erzeugten Leistungsdichteprofils verbleibenden Inhomogenitäten werden dadurch abgebaut, daß in den folgenden vier Strahlablenkzyklen die Lage der Ablenkspuren innerhalb der Zeilenraster 3.1 bis 3.5 zyklisch vertauscht wird. Statt dessen kann es je nach der Begrenzung der Teilleistungsdichte auch zweckmäßig sein, in Folgezyklen die Richtung der Ablenkspuren zu tauschen, so daß die Laufrichtung des Elektronenstrahles im Folgezyklus senkrecht zu der in Fig. 3 dargestellten Richtung verläuft. Zusätzlich kann die Laufrichtung des Elektronenstrahls innerhalb des jeweiligen Zeilenrasters getauscht werden. Durch Kombination der beiden letztgenannten Varianten ergibt sich eine Gruppe von vier Strahlablenkzyklen, die zu einem Strahlablenkprogramm zusammengefaßt sind, das vom Elektronenstrahl repitierend durchlaufen wird.

Im diesem Beispiel sei angenommen, daß der Prozeß eine Gesamtstrahlleistung von 20 kW erfordert. Der Strahldurchmesser auf der Bauteiloberfläche beträgt 0,5 mm. Die Beschleunigungsspannung des Elektronenstrahls beträgt 150 kV. Im Leistungsdichtemaximum soll auf einem ebenen Bauteil aus einem Eisenwerkstoff eine Oberflächentemperatur von 1300 °C erreicht werden. Zu keinem Zeitpunkt der Energieübertragung soll die Schmelztemperatur des Werkstoffs von 1400 °C überschritten werden. Damit ergibt sich am Ort der Strahleinwirkung eine zulässige Temperaturerhöhung von 100 °C. Wie durch einfache Abschätzung unter Berücksichtigung der Strahlreichweite im Werkstoff leicht nachvollziehbar, ergibt sich damit die Forderung an die erforderliche Strahlablenkgeschwindigkeit von $v \geq 2,5 \cdot 10^5 \, cms^{-1}$.

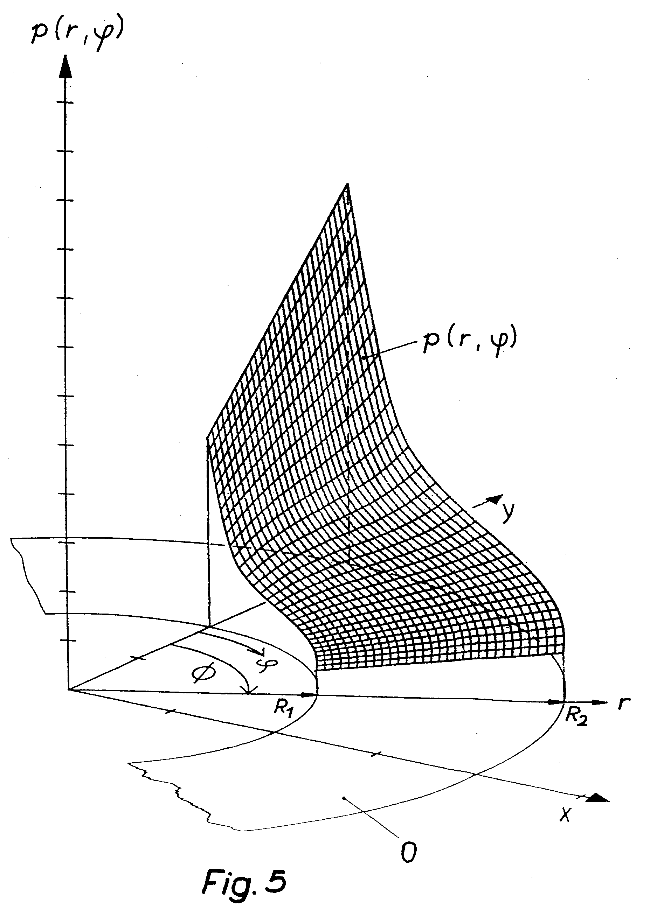

In einem zweiten Beispiel ist dargestellt, wie die ebene Oberfläche eines kreisringförmigen Bauteils gehärtet wird. In Fig. 5 ist die zu härtende Oberfläche O des ringförmigen Bauteils in einem kartesischen Koordinatensystem mit den Achsen x und y dargestellt. In der Ordinatenrichtung ist das zur Durchführung der Härteaufgabe benötigte Leistungsdichteprofil p (r, $\phi$) aufgetragen. Es erstreckt sich in azimutaler Richtung über den Winkel $\Phi$, in radialer Richtung auf die Distanz zwischen den

Radien $R_1$ und $R_2$. Zur Durchführung der Härteaufgabe wird das ringförmige Bau-teil unter dem Leistungsdichteprofil mit konstanter Winkelgeschwindigkeit bewegt. Die Energieübertragung erstreckt sich über einen Drehwinkel von mindestens 360° + $\Phi$. Die azimutale Ausdehnung des Energieübertragungsfeldes über den Winkel $\Phi$ ist abgestimmt auf die eingesetzte Leistung des Elektronenstrahls, die Winkelgeschwindigkeit der Drehbewegung, die Härtetiefe und die Werkstoffeigenschaften. Sie ist so gewählt, daß an der Stoßstelle der Härtebahn durch den erneuten Energieeintrag keine Anlaßzone entsteht. Wie hier nicht weiter ausgeführt, wird im Überlappungsbereich der Härtebahn zwischen 360° und 360° + $\Phi$ die Leistung des Elektronenstrahls entsprechend der Vorwärmung drehwinkelabhängig programmiert gesteuert.

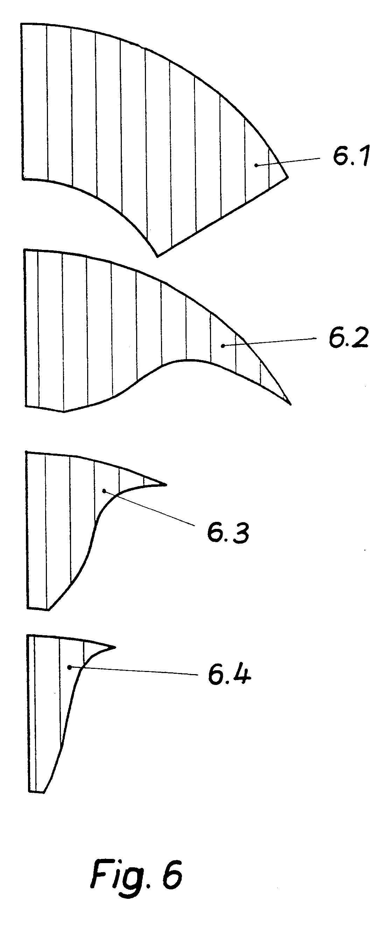

Zur Durchführung des erfindungsgemäßen Verfahrens wird analog zum Ausführungsbeispiel 1 das Leistungsdichteprofil p (r, $\phi$) in Flächen gleicher Teilleistungsdichte zerlegt. Fig. 6 zeigt die ersten vier Flächen 6.1 bis 6.4 einer Gesamtheit von n derartigen Flächen. Ebenfalls analog zum Ausführungsbeispiel 1 wird jeder dieser Flächen 6.1 bis 6.n ein Raster äquidistanter Strahlablenkspuren zugeordnet. Die Strahlablenkung erfolgt derart, daß nacheinander sämtliche Ablenkspuren jeder Fläche vom Elektronenstrahl mit konstanter Geschwindigkeit erzeugt werden. Zur gleichmäßigen Beaufschlagung der Oberfläche O des Bauteiles sind die Ablenkspuren in den Flächen 6.1 bis 6.n, wie aus Fig. 6 ersichtlich, gegeneinander versetzt. Nach Durchlaufen der Zeilen sämtlicher Flächen wiederholt sich der Ablenkvorgang. Der Abstand der Zeilen zueinander innerhalb einer Fläche ist größer oder gleich dem Strahldurchmesser in der Strahlauftrefffläche gewählt. Die Strahlablenkgeschwindigkeit ist so hoch bemessen, daß der am momentanen Strahlauftreffort in der Oberfläche des Bauteils erzeugte Temperatursprung sehr klein gegenüber der mittleren Oberflächentemperatur ist. Die Gesamtlänge der Ablenkspuren aller Flächen ist so gewählt, daß bei der vorgegebenen Strahlablenkgeschwindigkeit im Bereich von 1 bis 10 km/s während der Zyklusdauer des Ablenkprogramms keine wärmeleitungsbedingte störende Oszillation der Oberflächentemperatur in der Energieübertragungsfläche erfolgt.

**Patentansprüche**

1. Verfahren zur thermischen Oberflächenmodifikation metallischer Bauteile mit Elektronenstrahlen durch schnelle periodische Ablenkung des Elektronenstrahls mit konstanter Geschwindigkeit innerhalb eines flächenhaften Energieübertragungsfeldes mit vorgegebenem Leistungsdichteprofil, das relativ zur Bauteiloberfläche bewegt oder ruhend ist, bei der der Elektronenstrahl innerhalb eines Ablenkzyklus entlang eines sich über das Energieübertragungsfeld erstreckenden Zeilenrasters geführt wird, **dadurch gekennzeichnet,** daß der Elektronenstrahl innerhalb eines Ablenkzyklus entlang eines sich über das Energieübertragungsfeld erstreckenden Zeilenrasters, dessen Zeilenlage, Zeilenlänge und Zeilendichte nach Maßgabe des zu erzeugenden Leistungsdichteprofils gewählt ist, mit konstanter Ablenkgeschwindigkeit geführt wird.

2. Verfahren nach Anspruch 1, **dadurch gekennzeichnet,** daß das vorgegebene Leistungsdichteprofil in Scheiben bzw. Flächen bestimmter Teilleistungsdichten zerlegt und jeder der Flächen ein der Strahlablenkung entsprechendes Zeilenraster mit zur betreffenden Teilleistungsdichte proportionaler Zeilendichte zugeordnet wird, wobei innerhalb eines Strahlablenkzyklus die Gesamtheit der Zeilen aller Flächen vom Elektronenstrahl durchlaufen werden.

3. Verfahren nach Anspruch 1 und 2, **dadurch gekennzeichnet,** daß die den Flächen zugeordneten Teilleistungsdichten untereinander gleich gewählt werden.

4. Verfahren nach mindestens einem der Ansprüche 1 bis 3, **dadurch gekennzeichnet,** daß die Abstände der innerhalb eines Strahlablenkzyklus durchlaufenen Zeilen an keinem Ort des Energieübertragungsfeldes nenneswert größer als der Strahldurchmesser am betreffenden Einwirkort auf dem Bauteil gewählt wird.

5. Verfahren nach mindestens einem der Ansprüche 1 bis 4, **dadurch gekennzeichnet,** daß die den Teilleistungsdichten zugeordneten Zeilenraster derart gegeneinander versetzt werden, daß sie zumindest im Bereich der höchsten Gesamtleistungsdichte ein Zeilenraster äquidistanter Zeilen ergeben.

6. Verfahren nach mindestens einem der Ansprüche 1 bis 5, **dadurch gekennzeichnet,** daß die innerhalb eines Strahlablenkzyklus zeitlich nacheinander durchlaufenen, den Teilleistungsdichten zugeordneten Zeilenraster orthogonal zur Zeilenrichtung an jedem Ort auf dem Bauteil um mindestens einen Strahldurchmesser gegeneinander versetzt werden.

7. Verfahren nach mindestens einem der Ansprüche 1 bis 6, **dadurch gekennzeichnet,** daß mehrere zeitlich unmittelbar aufeinander folgende Strahlablenkzyklen zu einer Gruppe zusammengefaßt werden, innerhalb der die Zeilenlage, die Laufrichtung des Elektronenstrahls entlang der Zeilen und die Zeilenrichtung von Strahlablenkzyklus zu Strahlablenkzyklus verändert wird.

8. Verfahren nach mindestens einem der Ansprüche 1 bis 7, **dadurch gekennzeichnet,** daß die konstante Ablenkgeschwindigkeit, mit der Der Elektronenstrahl die Zeilen des Zeilenrasters durchläuft, nach Maßgabe der Stralleistung und des Strahldurchmessers am Strahleinwirkort auf dem Bauteil so hoch gewählt wird, daß der am momentanen Strahleinwirkort verursachte Temperatursprung klein gegen die Prozeßtemperatur ist.

9. Verfahren nach mindestens einem der Ansprüche 1 bis 8, **dadurch gekennzeichnet,** daß die zur Verfahrensdurchführung erforderliche Strahlleistung entsprechend dem Flächenintegral des zu erzeugenden Leistungsdichteprofils gewählt wird.

## Fig. 1

$p(r)$

$R$

$r$

## Fig. 2

$p'(r)$

2.5
2.4
2.3
2.2
2.1

$r$

$\Delta p_1$

## Fig. 4

4

## Fig. 3

3.1

3.2

3.3

3.4

3.5

Fig. 5

6.1

6.2

6.3

6.4

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 117 574 (BRITISH STEEL CORPORATION) * Seite 1, Zeile 27 - Seite 7, Zeile 6; Ansprüche 1,3-7,10,11; Beispiel 4 * | 1 | B23K15/00 C21D1/09 |
| A | | 6-8 | |
| A | CH-A-395 366 (UNITED AIRCRAFT CORPORATION) * Seite 1, Zeile 60 - Seite 8, Zeile 76; Ansprüche 1-12,15-17; Abbildungen 1-6,8-10 * | 1,2,4,5,8 | |
| D,A | DE-A-3 908 631 (VEB WERKZEUGMASCHINENKOMBINAT "FRITZ HECKERT") * das ganze Dokument * | 1,2,6,7,9 | |
| A | DE-B-2 419 383 (F. KRUPP HÜTTENWERKE AG) * das ganze Dokument * | 1,6 | |

| RECHERCHIERTE SACHGEBIETE (Int. Cl.5 ) |
|---|
| B23K C21D |

Der vorliegende Recherchenbericht wurde für alle Patentansprüche erstellt

| Recherchenort | Abschlußdatum der Recherche | Prüfer |
|---|---|---|
| DEN HAAG | 30 AUGUST 1993 | BLASBAND I. |